Europäisches Patentamt

European Patent Office

Office européen des brevets

(11) Publication number: **0 218 824 B1**

# EUROPEAN PATENT SPECIFICATION

(45) Date of publication of patent specification: 03.04.91    (51) Int. Cl.⁵: **B60G 15/12**, B60G 13/00, F16F 9/54

(21) Application number: 86110591.4

(22) Date of filing: 31.07.86

(54) Elastic suspension for a motor-car wheel.

(30) Priority: 11.10.85 IT 2244685

(43) Date of publication of application:
22.04.87 Bulletin 87/17

(45) Publication of the grant of the patent:
03.04.91 Bulletin 91/14

(84) Designated Contracting States:
DE FR GB SE

(56) References cited:
EP-A- 0 026 131    DE-A- 1 018 320
DE-A- 2 063 448    DE-A- 3 226 886
FR-A- 2 277 690    FR-A- 2 374 566
FR-A- 2 442 732

(73) Proprietor: S.A.G.A. - SOCIETA' APPLICAZIONI
GOMMA ANTIVIBRANTI S.p.A.
Via Ripamonti, 88
I-20141 Milan(IT)

(72) Inventor: Ugazio, Pierangelo
Viale Romolo, 6
I-20143 Milan(IT)
Inventor: Oggioni, Angelo
Via Tre Re, 27
Brugherio Milan(IT)
Inventor: Cantu', Marco
Via Pace, 14
Carugate Milano(IT)

(74) Representative: Giannesi, Pier Giovanni et al
Pirelli S.p.A. Direzione Brevetti Piazzale
Cadorna, 5
I-20123 Milano(IT)

## Description

The present invention concerns an elastic suspension of the McPherson type for a motor-car wheel, whch, as it is known, comprises substantially a shock-absorber whose rod is connected in correspondence of its extremity, to the chassis of the motor-car, substantially by means of an elastomeric block, and whose casing is connected to a strut supporting the wheel, and hinged to an oscillating suspension-arm that, in its turn, is hinged to the chassis itself.

Moreover, the suspension of the type indicated, comprises a spring that is apt to support the loads applied to the wheel and inside which there is located the above-said shock-absorber.

Said spring can also be of the pneumatic type i.e. comprising a casing made of a deformable material, and having a substantially cylindrical form, whose one end is connected to the above-said casing, and whose other end is connected to the chassis. Inside said spring there is a chamber containing air whose pressure generates a force that opposes the loads acting upon the wheel.

A particular example of such a suspension having an helicoidal spring is disclosed in the document EP-A-0 026 131.

But the above-indicated type of suspensions, presents some drawbacks.

The forces, applied to the wheel during the running of the vehicle, generate a moment of flexure on the rod of the shock-absorber, which tends to deform the rod itself, by determining jammings in the shock-absorber, an irregular wearing-out of the gaskets interposed between the rod and the casing and, more generally, conditions that are negative for a correct operation of the shock-absorber.

Said moment of flexure, results from the fact that the straight line of action of the forces acting upon the wheel, is substantially contained in vertical planes that lie at a certain distance from the hinge point between the casing of the shock-absorber and the above-said oscillating suspension arm.

For obviating this drawback, it was also proposed to dispose the helicoidal spring of the suspension in such a way that its axis is inclined at an prefixed angle with respect to the shock-absorber, so that the straight line of action of the reaction exchanged between the chassis and the shock-absorber, did not pass through the axis of the shock-absorber, but was opportunely shifted away from it for the purpose of generating a moment of flexure on the rod of the shock-absorber itself having an absolute value equal and a sign opposite to the moment generated by the force which, in each instant, is applied to the wheel.

This constructive solution is not quite satisfactory in cases when air-springs are used since, the above-said angle, between the axes of the spring and of the shock-absorber, cannot be very large and therefore, is insufficient to generate reaction moments that are capable of contrasting the moment of the force applied to the wheel. Moreover, in many cases, this constructive solution cannot be utilized owing to its excessive encumbrance.

The aim of the present invention is to realize a suspension and in particular, a suspension having a pneumatic spring of the above-mentioned type, without the drawbacks described.

This aim is realised by means of an elastic suspension for a motor-car wheel, comprising a shock-absorber, whose rod is connected at one end to the chassis of the motor-car by means of a first elastomeric block whose casing is connected to a strut supporting said wheel, said strut being hinged to an oscillating suspension-arm that, in its turn, is hinged to said chassis ; and a spring that is substantially coaxial to said shock-absorber, characterised in that:

A second elastomeric block is interposed between the undersurface of said chassis and the stop surface of a stop element, said stop surface lying in a plane substantially perpendicular to the longitudinal axis of the shock absorber, and in that

the displacement between the lower surface of said second elastomeric block and the stop surface of said stop element is asymmetrical about the longitudinal axis of the shock absorber

the second elastomeric block being arranged such that deformation takes place starting from the zone in said second block that lies, with respect to the axis of the shock-absorber, on the side opposite to said strut, whereby

moments of flexure are generated on said shock absorber rod that are opposed to the moments of flexure as generated by the outside forces applied to said wheel, on the rod itself.

For a better understanding of the object of the present invention there will now be given, solely by way of non-limiting example, a more detailed description of it, with reference to the attached drawings, wherein:

FIG. 1 - shows schematically, a vertical crosssection view of the elastic suspension according to the invention.

FIG. 2 - shows an enlarged detail, of the upper part of the suspension as seen in FIG. 1.

FIGS. 3 to 6 - show parts of an elastomeric block, that forms a part of the suspension according to the invention, which is carried out in four different embodiments.

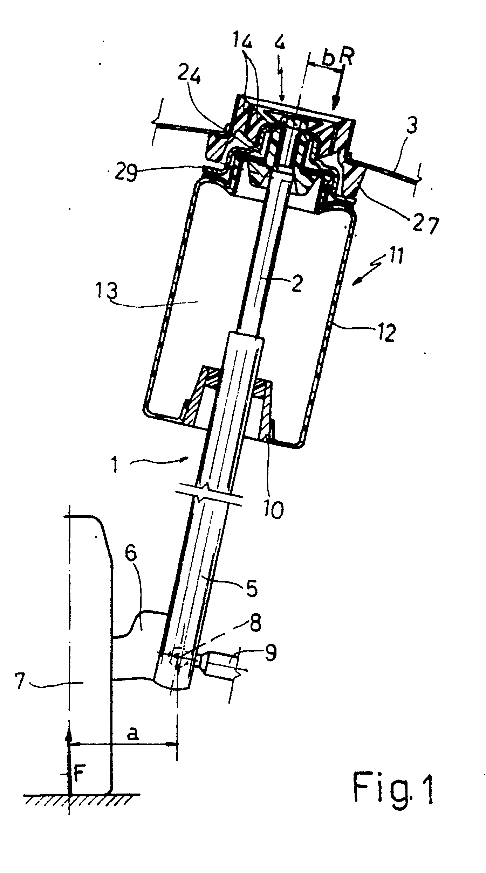

The McPherson type suspension of the invention, shown in FIG. 1, comprises a shock-absorber 1, whose rod 2 is connected, at its upper extremity, to the chassis 3 of a motor-car, substantially by means of an elastomeric block which is generally indicated by the numeral 4, and whose casing 5 is rigidly connected, at its lower end, to a strut 6 supporting a wheel 7 of the motor-car.

Said strut is hinged by means of an articulation 8, to an oscllating suspension-arm 9 that, in its turn, is hinged to the chassis 3.

Moreover, the suspension comprises a pneumatic spring, indicated by the numeral 11, which consits substantially of a tubular casing 12 whose upper end is connected to the corresponding end of rod 2, and whose lower end is connected to the upper end of the casing 5 of the shock-absorber, so as to define a cavity 13 for the air whose pressure, generates a on the casing 5, a force opposing the forces applied to the wheel 7. The connection of the lower end of the casing 12 (of the spring 11) to the shock-absorber 1 is achieved by means of a ring indicated by the numeral 10.

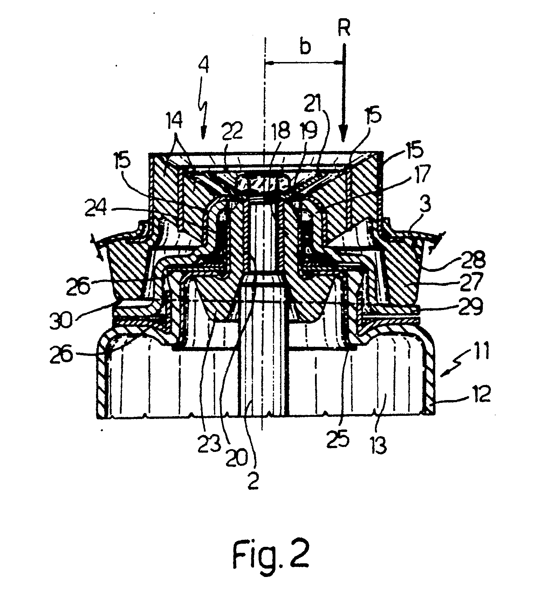

The elastomeric block 4 can conveniently comprise a plurality of annular elastomeric elements 14 (FIG. 2), and a plurality of annular metallic stiffening elements 15. Said block is connected, in any opportune way, to the chassis 3 and to a hollow body 17; on the upper end of the rod 2, there is fixed an elastomeric bush 18 integral with a pair of sleeves 19 and 20 the second of which is blocked at the same end by a conical collar 21 and a nut 22; the said bush is provided with an annular projection 23 which is apt to constitute a support for the upper end of the casing 5 of the shock-absorber.

Between the inner surface of the hollow body 17 and the outer surface of the sleeve 19, there is disposed a rolling bearing 24 apt to allow the rotation of the rod 2 with respect to the hollow element itself.

Another sleeve 25, made integral with the sleeve 19, and having a larger diameter than that of the previous sleeve, serves for carrying out the connection with the upper end of the casing 12 of the pneumatic spring 11. For this purpose suitably shaped rings 26 are used.

Moreover, the suspension of the invention comprises means for generating moments of flexure on the rod 2, that are opposed to the moments of flexure generated on the rod itselt (as will be described later on), by the outside forces applied to the wheel 7.

Said means comprise substantially a second elastomeric block 27, which is interposed between the undersurface 28 of the chassis 3 and a stop-element 29, integral with the upper end of the rod 14. For convenience sake the stop-element 29 is formed by an annular-shaped collar that is substantially orthogonal to the axis of the shock-absorber 2, of the hollow body 17.

The substantially ring-shaped second elastomeric block 27, is coaxial to the stop element 29 and has an average diameter that is substantially equal to that of the collar itself.

The lower surface of said second elastomeric block (indicated with the numeral 30 in FIG. 2), facing the stop element 29, is shaped so as its points are located at a different distance from the collar itself.

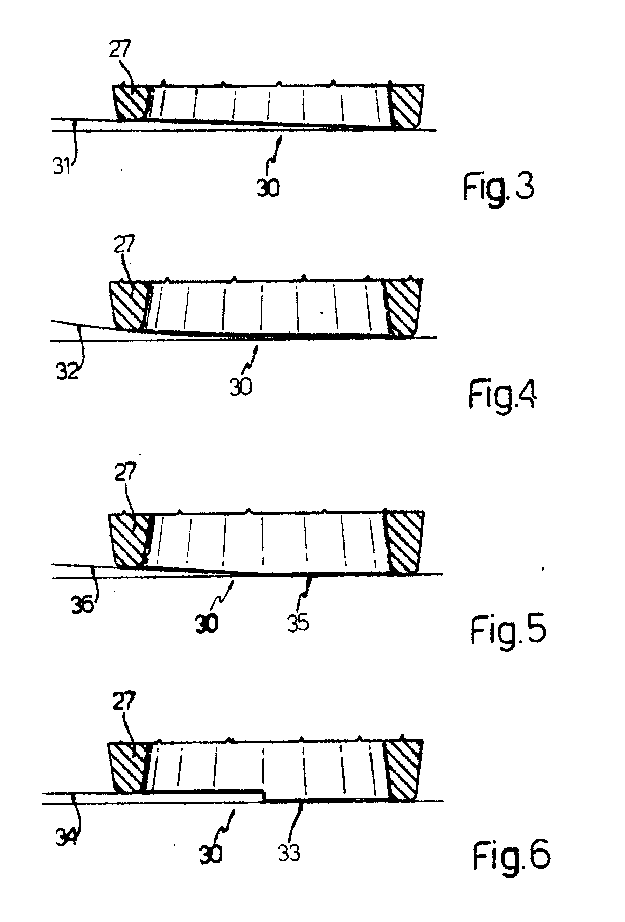

Hence, said lower surface 30 can have the shapes shown in the embodiments of FIGS. 3 to 6. In the embodiment of FIG. 3, the above-said lower surface lies substantially on a plane (whose outline is indicated with 31 in the figure), that forms an angle of less than 90° with the axis of the shock-absorber 2. In the embodiment of FIG. 4 the above-said lower surface lies substantially on a cylidrical surface or on any other curved surface. The directrix curve of said curved surface is indicated with numeral 32 in said figure. The lower surface 30 can be formed in such a way so as to rest upon at least two flat surfaces that are orthogonal to the axis of the rod 2, and which are at a different distance from the stop-element 29, as shown in FIG. 6 wherein the outline of said surfaces are indicated with the numerals 33 and 34. The above-said lower surface can also lie on several flat surfaces of which at least one is orthogonal to the axis of the rod 2, and each of the others forms an angle of less than 90° with the axis itself. In FIG. 5 the outlines of the above-said surfaces are indicated with the numerals 35 and 36.

Referring to fig.1, the block 27 is mounted on the chassis so as to have the part which is nearest to the stop-element 29, located with respect to the axes of the shock-absorber opposite to the strut 6, supporting the wheel 7 . In this way, the deformation will start from this part (as will be described later).

For convenience sake (as it is clearly seen in the figure), the block 27 can be integral with the block 4 and can be connected, for example, by vulcanization to the stiffening-element 15 that is furthermost from the block 4, so as to constitute a single unit.

The operation of the described suspension occurs in the following manner.

During the running of the vehicle, a substantially vertical forces $\overline{F}$ is appplied to the wheel 7, that is transmitted from the latter to the strut 6. Since this strut is made integral with the casing 5 of the shock-absorber, that in turn is fixed to the oscillating suspension-arm 9 and to the chassis 3 substantially through hinges, said force generates a moment of flexure on said shock-absorber that is substantially constant along it, and equal to the product of the force $\overline{F}$ multiplied by the distance $\overline{a}$ of the same, from the centre of the articulation 8.

Obviously, said moment tends to deform the rod 2 of the shock-absorber by bending it and causes the rod itself, to assume a deformation substantially similar to that of a circumference arc. Thanks to the configuration of second elastomeric block 27 according to the persent invention this deformation does not occur.

The component of the force $\overline{F}$ directed in the direction of the axis of the shock-absorber 1, deforms the pneumatic spring 11 substantially through compressing it causing the reaction of said spring and of the elastomeric block 4 to the force $\overline{F}$. Durung the deformation of the elastomeric block $\overline{4}$ the deformation of the second elastomeric block 27 also takes place. Said deformation takes place starting from the zone in the block 27 that lies, with respect to the axis of the shock-absorber, on the side opposite to said strut 6. Moreover said deformation also continues increasing as the deformation of the elastomeric block 4 augments.

Therefore, the reaction $\overline{R}$ , through which chassis 3, opposes the force $\overline{F}$ does not have the direction of the axis of the shock-absorber 1, but acts at a distance b from the axis itself, depending upon the form of the lower surface 30 of the second elastomeric block 27 and upon the latter's deformation. Moreover, the reaction R is substantially in the same plane of the force $\overline{F}$ and of the axis of the shock-absorber.

Hence, it is evident that, by opportunely selecting the form of the lower surface 30 of the elastomeric block 27 it is possible to so obtain that, in each instant the distance $\overline{b}$ of the reaction $\overline{R}$ from the axis of the shock-absorber 1 is such as to generate a counteracting moment, equal to the product of the reaction R multiplied by the distance $\overline{b}$ , that is capable of efficaciously opposing the moment $\overline{Fa}$ generated by the outside force applied to the wheel.

Since the two above-said moments, apart from having the same absolute value in each instant, act in the same plane, they substantially balance each other and hence, on the rod of the shock-absorber no moment of flexure is acting which could tend to bend the rod itself.

The second elastomeric blocks 27,whose lower surface 30 of which is shaped according to the embodiments of FIGS. 3 and 4, obviously generate counteracting moments, the value of which increases gradually, as the outside force is increased i.e. in contrast to what occurs for the blocks of FIGS. 5 and 6, where, the variaton of said moment occurs discontinuously.

In particular, the suspension can be provided with a cylindrical helicoidal spring in place of the pneumatic spring 11.

No matter which one of the two above-indicated springs is used, the suspension of the invention, apart from offering the advantage of efficaciously balancing the moments of flexure acting on the rod 2 of the shock-absorber, also is constructively very simple, small-sized and , can therefore be used in all applications.

In particular, the invention presents the characteristic of compensating the moments of flexure acting upon the rod by keeping high the capacity of reacting elastically to the forces acting transversal to the rod, between the chassis 3 and the rod itself.

This characteristic depends on the embodiment of a block 4 whose transversal rigidity high, due to the presence of the stiffening elements 15 and anyway, higher than its axial rigidity.

In practice, the block 4 has a low capacity for reacting axially when working under shear stress and consequently its presence does not interfere with the presence of the second elastomeric block 27 whose axial elastic reaction must be quite high in order to have a good operation of the suspension.

For example, it can be verified that, for a deformation of the second block 27 that corresponds to 20% of the total deformation, the axial elastic reaction of the first block 4 is, at most, equal to 10% of the total elastic reaction.

It also falls within the scope of the present invention (as defined in the appended claims) those solutions wherein the second block 27 is formed with its parts either, on the left-hand or, on the right-hand side of the rod 2, being in contact with the stop-element 29.

The resulting asymmetrical reaction could be determined by a different size of the thickness. In particular, with reference to FIG. 1, the transversal thickness of the block 27 that is in contact with the element 29, is higher at the right-hand side of the rod 2 - as compared to the thickness at the left-hand side of rod 2.

## Claims

1. Elastic suspension for a motor-car wheel 7, comprising a shock-absorber 1, whose rod 2 is connected at one end to the chassis 3 of the motor-car by means of a first elastomeric block 4 whose casing 5 is connected to a strut 6 supporting said wheel 7, said strut 6 being hinged to an oscillating suspension-arm 9 that, in its turn, is hinged to said chassis 3; and a spring 11 that is substantially coaxial to said shock-absorber, characterised in that:

   A second elastomeric block (27) is interposed between the undersurface (28) of said chassis (3) and the stop surface of a stop element (29), said stop surface lying in a plane substantially perpendicular to the longitudinal axis of the shock absorber, and in that

the displacement between the lower surface (30) of said second elastomeric block (27) and the stop surface of said stop element (29) is asymmetrical about the longitudinal axis of the shock absorber (2),

the second elastomeric block (27) being arranged such that deformation takes place starting from the zone in said second block that lies, with respect to the axis of the shock-absorber, on the side opposite to said strut, whereby

moments of flexure are generated on said shock absorber rod (2) that are opposed to the moments of flexure as generated by the outside forces applied to said wheel, on the rod itself.

2. Suspension, according to CLAIM 1, characterized by the fact that said lower surface 30, of said second block 27, lies on a plane 31 that forms an angle of less than 90° with the axis of said shock-absorber (1).

3. Suspension, according to Claim 1, characterized by the fact that said stop-element 29 is formed on a hollow body 17, with the said first block 4 being connected to the outer surface of the lateral wall of the said hollow body 17.

4. Suspension, according to Claim 1, characterized by the fact that said first and second blocks (4,27) are made in a single piece.

5. Suspension, according to Claims 3 or 4, characterized by the fact that said one end of the rod (2) is connected to a bush 18, disposed inside the hollow body 17, with rolling bearings 24 being interposed between said bush and said hollow body for rotation of the rod with respect to said stop-element.

6. Suspension, according to CLAIM 5, characterized by the fact that said bush 18, is formed from an elastomeric material and is provided with an annular projection 23 that is apt for constituting a buffer-stop for said casing of the shock-absorber.

7. Suspension, according to any one of the previous Claims, characterized by the fact that said spring, is a pneumatic spring.

8. Suspension according to claim 7 characterized in that said first elastomeric block 4 has a transversal rigidity higher than its axial rigidity.

**Revendications**

1. Suspension élastique pour une roue 7 de véhicule automobile comprenant un amortisseur 1, dont la tige 2 est raccordée, par une extrémité, au châssis 3 du véhicule automobile au moyen d'un premier bloc élastomère 4, dont le carter 5 est raccordé à une barre de liaison 6 supportant ladite roue 7, ladite barre de liaison 6 étant articulée à un bras de suspension oscillant 9, qui à son tour est articulé audit châssis 3; et un ressort 11 qui est sensiblement coaxial audit amortisseur, caractérisée en ce que : un second bloc élastomère (27) est intercalé entre la surface inférieure (28) dudit châssis (3) et la surface de butée d'un élément de butée (29), ladite surface de butée étant située dans un plan sensiblement perpendiculaire à l'axe longitudinal de l'amortisseur, et en ce que le déplacement entre la surface intérieure (30) dudit second bloc élastomère (27) et la surface de butée dudit élément de butée (29) est dissymétrique autour de l'axe longitudinal de l'amortisseur (2), le second bloc élastomère (27) étant disposé de telle sorte qu'une déformation se produit à partir de la zone du second bloc, qui est située, par rapport à l'axe de l'amortisseur, sur le côté opposé à ladite barre de liaison, ce qui fait apparaître dans ladite tige (2) d'amortisseur, des moments de flexion qui sont opposés aux moments de flexion produits par les forces extérieures appliquées à ladite roue, au niveau de la tige elle-même.

2. Suspension selon la revendication 1, caractérisée en ce que ladite surface intérieure (30) dudit second bloc (27) est située dans un plan (31) qui fait un angle inférieur à 90° par rapport à l'axe dudit amortisseur (1).

3. Suspension selon la revendication 1, caractérisée en ce que ledit élément de butée (29) est formé sur un corps creux (17), le premier bloc (4) étant raccordé à la surface extérieure de la paroi latérale dudit corps creux (17).

4. Suspension selon la revendication 1, caractérisée en ce que lesdits premier et second blocs (4,27) sont réalisés d'un seul tenant.

5. Suspension selon la revendication 3 ou 4, caractérisée en ce que ladite première extrémité de la tige (2) est raccordée à un manchon 18, disposé à l'intérieur du corps creux (17), tandis que des roulements (24) sont intercalés entre ledit manchon et ledit corps creux de manière à permettre la rotation de la tige par rapport audit élément de butée.

6. Suspension selon la revendication 5, caractérisée en ce que ledit manchon (18) est réalisé en un matériau élastomère et comporte une partie saillante annulaire (23) apte à constituer une butée tampon pour ledit carter de l'amortisseur.

7. Suspension selon l'une quelconque des revendications précédentes, caractérisée en ce que ledit ressort est un ressort pneumatique.

8. Suspension selon la revendication 1, caractérisée en ce que ledit premier bloc élastomère (4) possède une rigidité transversale supérieure à sa rigidité axiale.

## Ansprüche

1. Elastische Aufhängung für ein Kraftfahrzeugrad (7), umfassend einen Stoßdämpfer (1), dessen Stange (2) an einem Ende mittels eines ersten elastomeren Blocks (4) mit dem Chassis (3) des Kraftfahrzeuges, und dessen Gehäuse (5) mit einer das Rad (7) tragenden Strebe (6) verbunden ist, die an einem schwingenden Aufhängungsarm (9) angelenkt ist, der seinerseits an dem Chassis (3) angelenkt ist, und eine Feder (11), die im wesentlichen gleichachsig zu dem Stoßdämpfer vorliegt, **dadurch gekennzeichnet, daß**

ein zweiter elastomerer Block (27) zwischen der Unterfläche (28) des Chassis (3) und der Anschlagfläche eines Anschlagelementes (29) angeordnet ist, wobei die Anschlagfläche in einer Ebene im wesentlichen rechtwinkelig zur Längsachse des Stoßdämpfers liegt, und daß

die Verschiebung zwischen der unteren Fläche (30) des zweiten elastomeren Blocks (27) und der Anschlagfläche des Anschlagelementes (29) um die Längsachse des Stoßdämpfers (2) assymetrisch ist, und

der zweite elastomere Block (27) derart angeordnet ist, daß Verformung stattfindet, beginnend von der Zone in dem zweiten Block, die mit Bezug auf die Achse des Stoßdämpfers auf der Seite liegt, die der Strebe gegenüberliegt, wodurch

Biegemomente an der Stoßdämpferstange (2) erzeugt werden, die zu den Biegemomenten entgegengesetzt sind, die durch die äußeren Kräfte, die auf der Straße an das Rad angelegt werden, erzeugt werden.

2. Aufhängung nach Anspruch 1, dadurch gekennzeichnet, daß die untere Fläche (30) des zweiten Blocks (27) auf einer Ebene (31) liegt, die einen Winkel von weniger als 90° mit der Achse des Stoßdämpfers (1) bildet.

3. Aufhängung nach Anspruch 1, dadurch gekennzeichnet, daß das Anschlagelement (29) an einem hohlen Körper (7) gebildet ist, wobei der erste Block (4) mit der äußeren Fläche der seitlichen Wand des hohlen Körpers (17) verbunden ist.

4. Aufhängung nach Anspruch 1, dadurch gekennzeichnet, daß der erste und der zweite Block (4,27) einstückig gebildet sind.

5. Aufhängung nach Anspruch 3 oder 4, dadurch gekennzeichnet, daß das genannte eine Ende der Stange (2) mit einer Buchse (18) verbunden ist, die in dem hohlen Körper (17) angeordnet ist, wobei Rollenlager (24) zwischen der Buchse und dem hohlen Körper angeordnet sind für Drehung der Stange mit Bezug auf das Anschlagelement.

6. Aufhängung nach Anspruch 5, dadurch gekennzeichnet, daß die Buchse (18) aus elastomerem Material gebildet und mit einem ringförmigen Vorsprung (23) versehen ist, der einen Pufferanschlag für das Gehäuse des Stoßdämpfers darstellen kann.

7. Aufhängung nach irgendeinem der vorhergehenden Ansprüche, dadurch gekennzeichnet, daß die Feder eine Luftfeder ist.

8. Aufhängung nach Anspruch 1, dadurch gekennzeichnet, daß der erste elastomere Block (4) eine Quersteifigkeit hat, die größer als seine axiale Steifigkeit ist.

Fig.1

Fig. 2

Fig.3

Fig.4

Fig.5

Fig.6